# EUROPÄISCHE PATENTANMELDUNG

(11) **EP 4 403 788 A1**
(43) Veröffentlichungstag der Anmeldung: **24.07.2024**
(21) Anmeldenummer: 23152033.9
(22) Anmeldetag: 17.01.2023
(51) Int. Cl.: F16D 1/104

(54) **WELLE-NABE-VERBINDUNG ZWISCHEN EINER METALLISCHEN WELLE UND EINER NABE AUS KUNSTSTOFF**

(71) Anmelder: Hilti Aktiengesellschaft, 9494 Schaan (LI)
(72) Erfinder: Mucha, Steffen, 86930 Schwabmünchen (DE); Seltmann, Daniel, 86899 Landsberg am Lech (DE)
(74) Vertreter: Hilti Aktiengesellschaft Corporate Intellectual Property

(57) **Zusammenfassung**

Die Erfindung betrifft eine Welle-Nabe-Verbindungsanordnung zur Übertragung von Drehmomenten zwischen einer metallischen Welle (1) und einer formschlüssig hiermit verbundenen Nabe (2) aus Kunststoff, wobei die Welle (1) zumindest im Verbindungsbereich mit mindestens einer im Querschnitt konkaven Längsnut (3) versehen ist, und die Nabe (2) hierzu korrespondierend mit sich von der Innenwandung (6) nach innen erstreckenden Klapphebelmitteln (7a, 7b, 8a, 8b) versehen ist, die mit der Längsnut (3) einen Formschluss bilden. Die Klapphebelmitteln (7a, 7b, 8a, 8b) umfassen Hebelschenkel (7a, 7b) ,die an beidseitigen Nutflankenbereichen (5a, 5b) der Längsnut (3) zur Anlage kommen.

## Beschreibung

Die vorliegende Erfindung betrifft eine Welle-Nabe-Verbindungsanordnung zur Übertragung von Drehmomenten zwischen einer metallischen Welle und einer formschlüssig hiermit verbundenen Nabe aus Kunststoff. Außerdem betrifft die Erfindung ein Elektrohandwerkzeug, mit einer Antriebseinheit, die insbesondere mit einer Getriebeeinheit über eine solche Welle-Nabe-Verbindungsanordnung verbunden ist.

Das Einsatzgebiet der Erfindung erstreckt sich vornehmlich auf elektromotorisch betriebene Werkzeugmaschinen, insbesondere Handwerkzeuge, wie Bohrmaschinen, Bohrhämmer oder Meißelhämmer, deren rotatorisch angetriebenen Komponenten, insbesondere eine elektromotorische Antriebseinheit, per Welle-Nabe-Verbindung an eine nachfolgende Komponente, beispielsweise einer Getriebeeinheit zur Übersetzung und/oder Umformung in der rotatorischen Antriebsenergie anzuschließen ist. Naben können im Rahmen der vorliegenden Anmeldung als Zahnrad, Steckmuffe oder andere Teile eines im Antriebsstrang angeordneten Bauelements ausgebildet sein.

Mit dem technischen Trend eines zunehmenden Leichtbaus kommen vielfach Naben zum Einsatz, welche aus einem Kunststoffmaterial hergestellt sind. Demgegenüber bestehen Wellen meist aus einem metallischen Material. Im Rahmen dieser Materialpaarung ist es zu vermeiden, dass mit einem ansteigenden zu übertragenden Drehmoment über die Welle-Nabe-Verbindung ein Verschleiß der Verbindungsstelle auftritt. Aus diesem Grund wird bei dieser speziellen Materialpaarung meist eine hier interessierende formschlüssige Verbindung gewählt.

Aus dem allgemein bekannten Stand der Technik gehen formschlüssige Welle-Nabe-Verbindungsanordnungen hervor, bei denen beispielsweise eine Steckverzahnung - auch Passverzahnung genannt - zum Einsatz kommt. Es handelt sich hierbei um eine Vielfach-Mitnehmerverbindung, wobei das Drehmoment von den Zahnflanken übertragen wird. Hierfür ist die Welle außenverzahnt und die hiermit zusammenwirkende Nabe ist innenverzahnt. Eine solche Steckverzahnung erfordert eine hohe Fertigungsgenauigkeit, damit möglichst alle Zahnflanken im Rahmen einer geringfügigen elastischen Verformung an der Übertragung beteiligt sind.

Ebenfalls allgemein bekannt sind Welle-Nabe-Verbindungsanordnungen, bei denen eine im Querschnitt runde Welle mit einer korrespondierenden Bohrung seitens der Nabe zusammenwirkt, wobei der Formschluss über mindestens ein quer zur Axialrichtung die beiden Bauteile zumindest teilweise durchdringendes Verbindungsmittel, beispielsweise eine Stellschraube oder ein Bolzen hergestellt wird. Ferner kommen als Verbindungsmittel solcher Einfach-Mitnehmerverbindungen auch Passfedern und dergleichen zum Einsatz, welche sich allerdings wegen der lokal konzentrierten Momentübertragungsstelle nur begrenzt zum Einsatz in Verbindung mit Kunststoffnaben eignen.

Aus der DE 77 40 014 U1 geht eine gattungsgemäße Welle-Nabe-Verbindungsanordnung zwischen einer metallischen Welle und einer formschlüssig hiermit verbundenen Nabe aus Kunststoff hervor. Offenbart ist eine auf eine Welle aufsteckbare Kunststoffnabe, insbesondere eine Nabe eines auf einer Motorwelle eines Axialventilators aufsteckbaren Kunststoff-Lüfterrades, mit einem nahe der Wellenbohrung vor dem Aufstecken eingearbeiteten Metallteil, das über ein Befestigungselement in Mitnahmeverbindung mit der Welle bringbar ist, wobei in die Kunststoffnabe zumindest eine U-förmige Blechlasche mit radial zur Welle gerichtete Schenkelöffnung eingebracht ist, in welche beim Aufstecken der Kunststoffnabe ein mit der Welle verbundener korrespondierender Mitnahmestift zur formschlüssigen Verbindung eingreift. Für diese technische Lösung sind jedoch mehrere verbindungsvermittelnde Hilfsbauteile erforderlich.

Es ist die Aufgabe der vorliegenden Erfindung eine Welle-Nabe-Verbindungsanordnung der gattungsgemäßen Art dahingehend weiter zu verbessern, dass ohne separate Bauteile eine zuverlässige formschlüssige Drehverbindung herstellbar ist.

### Kurzbeschreibung der Erfindung

Die Aufgabe wird ausgehend von einer Welle-Nabe-Verbindungsanordnung gemäß dem Oberbegriff von Anspruch 1 in Verbindung mit dessen kennzeichnenden Merkmalen gelöst. Hinsichtlich eines die erfindungsgemäße Welle-Nabe-Verbindungsanordnung aufweisenden Elektrohandwerkzeugs wird auf Anspruch 11 verwiesen. Die übrigen abhängigen Ansprüche geben vorteilhafte Weiterbildungen der Erfindung wieder.

Die Erfindung schließt die technische Lehre ein, dass die Welle zumindest im Verbindungsbereich mit mindestens einer im Querschnitt konkaven Längsnut versehen ist, und dass die Nabe hierzu korrespondierend mit sich von der Innenwandung nach innen - vorzugsweise überwiegend nach radial innen - erstreckenden Klapphebelmitteln versehen ist, die im montierten Zustand in beidseitigen Nutflankenbereichen der Längsnut formschlüssig zur Anlage kommen.

Der Vorteil der erfindungsgemäßen Lösung liegt insbesondere darin, dass eine direkte formschlüssige Verbindung zur Montage einer metallischen Welle in einer Kunststoffnabe ermöglicht wird, ohne dass hierfür weitere drehverbindungsvermittelnde Metallbauteile erforderlich sind. Die erfindungsgemäße Verbindung ermöglicht darüber hinaus eine Kompensation eines infolge der Belastung normalerweise auftretenden Bewegungsspiels zwischen der Kunststoffnabe und der Metallwelle. Denn durch die federnde Eigenschaft des Kunststoffmaterials wirken die seitens der Kunststoffwelle angeformten Klapphebelmittel in Verbindung mit der geometrischen Gestaltung der Längsnut als konkave Wölbung spielausgleichend. Die erfindungsgemäße Funktionsintegration der Klapphebelmittel als formschlüssige Befestigungskomponente an der Kunststoffnabe führt dazu, dass zusätzliche Einzelteile entbehrlich sind.

Gemäß einer bevorzugten Ausführungsform der Erfindung umfassen die Klapphebelmittel mindestens zwei von derselben Ausgangsstelle der Innenwandung ausgehende und sich hiervon V-förmig nach innen erstreckende Hebelschenkel. Die distalen Enden der Hebelschenkel kommen im Flankenbereich der konkaven Längsnut zur Anlage, womit in beide Drehrichtungen eine stabile formschlüssige Welle-Nabe-Verbindung geschaffen wird. Bei einer alternativen Ausführungsform können die Klapphebelmittel auch von unterschiedlichen Ausgangsstellen der Innenwandung ausgehende Hebelschenkel aufweisen.

Gemäß einer die Erfindung weiter verbessernden Maßnahme sind im distalen Endbereich der Hebelschenkel einander zugewandte Arretierzungen verschwenkbar angeformt. Diese Arretierzungen können darüber hinaus auch mit einem Filmscharnier an den aneinanderstoßenden distalen Enden schwenkbar miteinander verbunden werden, um die gewünschte Verbindungssicherung zu gewährleisten. Davon abgesehen schmiegen sich die Arretierzungen in der arretierten Position auch an dem Nutgrundbereich der konkaven Längsnut an bzw. stützen sich an dem Nutgrundbereich der konkaven Längsnut ab, um in dieser Position die arretierte Stellung der Hebelschenkel zu sichern. Die mit den Arretierzungen ausgestatteten Hebelschenkel bilden somit im Zusammenwirken miteinander und mit der konkaven Längsnut der Welle eine Art bistabilen Kniehebelmechanismus.

Bei einer alternativen Ausführung kann ein bistabiles Element vorgesehen sein, dass mit den beiden Hebelschenkeln verbunden ist. Das bistabile Element kommt insbesondere statt der beiden Arretierzungen zum Einsatz. Das bistabile Element kann von einer nach außen gewölbten Grundposition in Richtung einer nach innen gewölbten aufgepreizten Position verlagert werden. In der aufgespreizten Position nimmt das bistabile Element eine selbsthemmende Position ein.

Vorzugsweise sollte die Welle mit mehreren über den gesamten Umfang verteilt angeordneten konkaven Längsnuten versehen werden, so dass sich ein im Querschnitt Sternprofil ergibt. Hiermit korrespondierend können ein oder mehrere Klapphebelmittel innenwandseitig der Nabe vorgesehen werden, die mit je einer der konkaven Längsnuten zusammenwirken.

Zur zusätzlichen oder alternativen Arretierung der Hebelschenkel kann gemäß einer weiteren optionalen Maßnahme der hiervon gebildete Zwischenraum mit einem Einsteckelement versehen werden, um die Hebelschenkel in der arretierten Solllage zu halten. Als Einsteckelemente eignen sich dabei beispielsweise Stifte mit einem Rund- oder Dreieckprofil.

Bei der erfindungsgemäßen Welle-Nabe-Verbindungsanordnung ist der Hülldurchmesser der Welle derart auf den Nabendurchmesser abgestimmt, dass entlang der axialen Verbindungsstrecke beider Komponenten zumindest teilweise eine Spielpassung besteht. Dies ermöglicht ein geringfügiges radiales Bewegungsspiel der Bauteilverbindung, ohne dass die Drehmomentübertragung hiervon beeinträchtigt wird. Denn die Drehmomentübertragung erfolgt über die Klapphebelmittel.

### Detailbeschreibung anhand Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: einen schematischen Querschnitt durch die Welle-Nabe-Verbindungsanordnung in montierter Position der Welle mit der Nabe, und
- Fig. 2: einen schematischen Querschnitt durch die Welle-Nabe-Verbindungsanordnung in arretierter Position nach Montage gemäß Fig. 1.

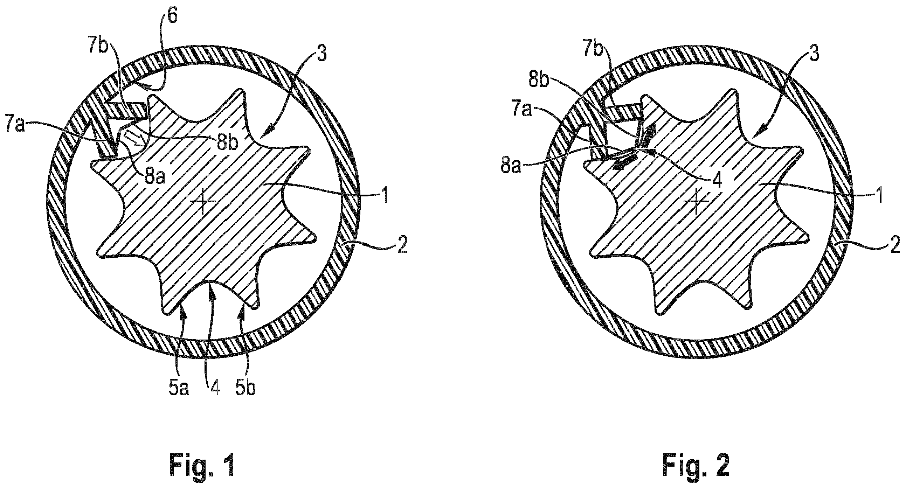

Gemäß Fig. 1 besteht die schematisch dargestellte Welle-Nabe-Verbindungsanordnung zur Übertragung von Drehmomenten aus einer metallischen Welle 1 einerseits und einer Nabe 2 aus Kunststoff andererseits - welche hier nur teilweise dargestellt ist.

Die Welle 1 ist entlang ihres Umfangs mit mehreren benachbart zueinander angeordneten konkaven Längsnuten 3 versehen. Die Längsnuten 3 beschreiben im Querschnitt einen Teilkreis. Jede Längsnut 3 umfasst um die tiefste Stelle herum einen Nutgrundbereich 4 sowie hieran beidseitig abgrenzende Nutflankenbereiche 5a und 5b. Alle drei Bereiche 4, 5a und 5b nehmen bei diesem Ausführungsbeispiel in etwa dabei dieselbe Bogenstrecke des Nutquerschnitts ein.

Zur Längsnut 3 korrespondierend sind seitens der Nabe 2 an deren Innenwandung 6 Klapphebelmittel angeformt. Die insoweit ebenfalls aus dem Kunststoffmaterial der Nabe 2 bestehenden Klapphebelmittel sind bei diesem Ausführungsbeispiel aus zwei von derselben Ausgangsstelle an der Innenwandung 6 V-förmig ausgehende und sich nach innen erstreckende Hebelschenkel 7a und 7b ausgebildet. Im distalen Endbereich der jeweiligen Hebelschenkel 7a und 7b sind einander zugewandte Arretierzungen 8a bzw. 8b angeformt. Diese werden zur Arretierung der formschlüssigen Verbindung nach Montage in die angegebene Pfeilrichtung gebracht.

Gemäß Fig. 2 schmiegen sich die Arretierzungen 8a und 8b der Hebelschenkel 7a bzw. 7b in der arretierten Position an den Nutgrundbereich 4 der Längsnut 3 an und spreizen hierdurch die Hebelschenkel 7a und 7b in die jeweils angegebene Pfeilrichtung. Hierdurch wird nach Art eines Kniehebelspann-Mechanismus also ein auseinanderdrückender Hebelschenkel 7a und 7b bewirkt, so dass diese mit dem distalen Endbereich an die Längsnut 3 angepresst werden. Diese arretierte Position kann zusätzlich durch ein - nicht weiter dargestelltes - Einsteckelement in den durch die Hebelschenkel 7a und 7b gebildeten Zwischenraum gesichert werden.

Ersichtlicherweise besteht zwischen der Innenwandung 6 der Nabe 2 und dem Hüllkreisdurchmesser der Welle 1 ein Spalt, der entlang der axialen Verbindungsstrecke eine Spielpassung zwischen den beiden Bauteilen bewirkt, welcher allerdings durch die arretierten Klapphebelmittel in eine Presspassung überführt wird. Zwar sind bei diesem Ausführungsbeispiel lediglich an einer einzigen Längsnut 3 die dieser zugeordneten Klapphebelmittel veranschaulicht. Derartige Klapphebelmittel sind jedoch über den gesamten Umfang verteilt für mehrere der Längsnuten 3 vorgesehen.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, nur einen Teil der entlang des Umfangs angeordneten Längsnuten mit zugeordneten Klapphebelmitteln zur formschlüssigen Verbindung zu versehen. Dementsprechend ist es auch nicht erforderlich, den gesamten Umfang der Welle mit den konkaven Längsnuten auszustatten, so dass sich ein Sternprofil bildet. Die Anzahl der mit formschlüssigen Verbindungsmitteln zusammenwirkenden konkaven Längsnuten der Welle mit nabenseitigen Klapphebelmitteln richtet sich vornehmlich nach dem zu übertragenden maximalen Drehmoment.

### Bezugszeichenliste

- 1: Welle
- 2: Nabe
- 3: Längsnut
- 4: Nutgrundbereich
- 5: Nutflankenbereich
- 6: Innenwandung
- 7: Hebelschenkel
- 8: Arretierzunge

## Patentansprüche

1. Welle-Nabe-Verbindungsanordnung zur Übertragung von Drehmomenten zwischen einer metallischen Welle (1) und einer formschlüssig hiermit verbundenen Nabe (2) aus Kunststoff,
**dadurch gekennzeichnet, dass** die Welle (1) zumindest im Verbindungsbereich mit mindestens einer im Querschnitt konkaven Längsnut (3) versehen ist, und dass die Nabe (2) hierzu korrespondierend mit sich von der Innenwandung (6) nach innen erstreckenden Klapphebelmitteln versehen ist, die in beidseitigen Nutflankenbereichen (5a, 5b) der Längsnut (3) formschlüssig zur Anlage kommen.

2. Welle-Nabe-Verbindungsanordnung nach Anspruch 1,
**dadurch gekennzeichnet, dass** die Klapphebelmittel aus mindestens zwei von derselben Ausgangsstelle an der Innenwandung (6) ausgehende und sich hiervon V-förmig nach innen erstreckende Hebelschenkel (7a, 7b) umfassen.

3. Welle-Nabe-Verbindungsanordnung nach Anspruch 1 oder 2,
**dadurch gekennzeichnet, dass** im distalen Endbereich der Hebelschenkel (7a, 7b) einander zugewandte Arretierzungen (8a, 8b) verschwenkbar angeformt sind.

4. Welle-Nabe-Verbindungsanordnung nach einem der voranstehenden Ansprüche,
**dadurch gekennzeichnet, dass** sich die Arretierzungen (8a, 8b) an den Nutgrundbereich (4) der Längsnut (3) in der arretierten Position anschmiegen.

5. Welle-Nabe-Verbindungsanordnung nach einem der voranstehenden Ansprüche,
**dadurch gekennzeichnet, dass** mehrere konkave Längsnuten (3) benachbart zueinander über den Umfang der Welle (1) angeordnet sind, so dass sich ein Sternprofil ergibt.

6. Welle-Nabe-Verbindungsanordnung nach einem der Ansprüche 2 bis 5,
**dadurch gekennzeichnet, dass** zur Arretierung der Hebelschenkel (7a, 7b) ein den hiervon gebildeten Zwischenraum angeordnetes Einsteckelement der Solllage gehalten sind.

7. Welle-Nabe-Verbindungsanordnung nach einem der vorstehenden Ansprüche, **dadurch gekennzeichnet, dass** zwischen der Innenwandung (6) der Nabe (2) und dem Hüllkreisdurchmesser der Welle (1) entlang der axialen Verbindungsstrecke zumindest teilweise eine Spielpassung besteht.

8. Welle-Nabe-Verbindungsanordnung nach einem der vorstehenden Ansprüche, **dadurch gekennzeichnet, dass** die Welle (1) als eine Getriebewelle ausgebildet ist.

9. Welle-Nabe-Verbindungsanordnung nach einem der vorstehenden Ansprüche, **dadurch gekennzeichnet, dass** die Nabe (1) Bestandteil eines Getrieberades ist.

10. Welle-Nabe-Verbindungsanordnung nach Anspruch 9,
**dadurch gekennzeichnet, dass** das Getrieberad als ein Zahnrad, Reibrad oder eine Riemenscheibe ausgebildet ist.

11. Elektrohandwerkzeug, mit einer Antriebseinheit, die mit einer Getriebeeinheit über eine Welle-Nabe-Verbindungsanordnung nach einem der vorstehenden Ansprüche verbunden ist.
